# EUROPÄISCHE PATENTSCHRIFT

(11) **EP 3 840 562 B1**
(45) Veröffentlichungstag und Bekanntmachung des Hinweises auf die Patenterteilung: **30.04.2025**
(21) Anmeldenummer: 19762316.8
(22) Anmeldetag: 16.08.2019
(51) Int. Cl.: A01C 15/04, A01C 7/12

(54) **DOSIEREINHEIT FÜR PULVER- ODER PARTIKELFÖRMIGES VERTEILGUT UND VERTEILMASCHINE MIT EINER SOLCHEN DOSIEREINHEIT**
METERING UNIT FOR PULVERULENT OR PARTICULATE MATERIAL TO BE DISTRIBUTED, AND DISTRIBUTION MACHINE HAVING SUCH A METERING UNIT
UNITÉ DE DOSAGE POUR MATIÈRE À DISTRIBUER PULVÉRULENTE OU PARTICULAIRE ET MACHINE DE DISTRIBUTION COMPRENANT UNE TELLE UNITÉ DE DOSAGE

(30) Priorität: 23.08.2018 DE 102018006660
(43) Veröffentlichungstag der Anmeldung: 30.06.2021
(73) Patentinhaber: RAUCH Landmaschinenfabrik GmbH, 77836 Rheinmünster (DE)
(72) Erfinder: BOOS, Florian, 76547 Sinzheim (DE); BOOS, Daniel, 76547 Sinzheim (DE); SCHÄFER, Fabian, 76473 Iffezheim (DE); KLEIN, Frédéric, 67000 Strasbourg (FR)
(74) Vertreter: Lichti - Patentanwälte Partnerschaft mbB
(86) Internationale Anmeldenummer: PCT/EP2019/000241
(87) Internationale Veröffentlichungsnummer: WO 2020/038599

(56) Entgegenhaltungen:
- EP-A1- 2 260 689
- WO-A1-2009/036575
- US-A- 5 024 356
- US-A1- 2017 118 905

## Beschreibung

Die Erfindung betrifft eine Dosiereinheit für pulver- und/oder partikelförmiges Verteilgut, insbesondere Saatgut und/oder Dünger, mit einer Dosierwalze mit wenigstens zwei Dosierradsegmenten, welche in einem Dosiergehäuse mit einem Einlass und einem Auslass gelagert ist, wobei einem jeweiligen Dosierradsegment ein unabhängig voneinander betätigbarer Absperrschieber zugeordnet ist, um ein oder mehrere Dosierradsegment(e) bedarfsweise außer Betrieb zu setzen. Die Erfindung bezieht sich ferner auf eine Verteilmaschine, insbesondere Sämaschine oder Düngerstreuer, mit wenigstens einer solchen Dosiereinheit.

Derartige Dosiereinheiten finden insbesondere in pneumatischen Verteilmaschinen, wie z.B. pneumatischen Sämaschinen, Drillmaschinen und pneumatischen Düngerstreuern, sogenannten Gebläsestreuern, Verwendung. Solche pneumatischen Verteilmaschinen existieren einerseits in leichter Bauart als Anbaugeräte, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise eine Mehrzahl an seitlich nach außen ragende Ausleger, welche in unterschiedlichem Abstand voneinander endende Verteilerleitungen aufnehmen. Zur Förderung des Verteilgutes dient ein Gebläse, dessen Druckleitung sich an den Auslass einer jeweiligen Dosiereinheit anschließt und in einem Druckverteiler mündet, an welchen sich mehrere Verteilerleitungen anschließen. Zwischen dem Druckverteiler und den Verteilerleitungen angeordnete Injektoren können zur Übergabe des Verteilgutes von den Dosiereinheiten an die Verteilerleitungen dienen, um sicherzustellen, dass jeder Verteilerleitung dieselbe Menge an Streugut aufgegeben wird. Alternativ kann sich an den Auslass einer jeweiligen Dosiereinheit auch nur eine Förderleitung anschließen, welche in einen oder in einem jeweiligen Verteilerkopf führt, von welchem eine Mehrzahl an Verteilerleitungen abgehen. Das Verteilgut wird schließlich pneumatisch über die nach außen umgelenkten Verteilerleitungen bis zu deren Ende gefördert, wo das Verteilgut auf Verteilorgane, welche üblicherweise von Prallplatten oder Säscharen gebildet sind, auftrifft und von dort im Wesentlichen fächerförmig (im Falle von Prallplatten) oder etwa linienförmig (im Falle von Säscharen) auf dem Boden abgelegt oder auch in eine in dem Boden erzeugte Furche eingebracht wird. Der Hauptvorteil von Pneumatikstreuern gegenüber mit Verteilerscheiben ausgestatteten Scheibenstreuern liegt insbesondere darin, dass sie über eine größere Streubreite eine gleichmäßigere Verteilung des Streugutes zu bewerkstelligen vermögen. Ein derartiger Pneumatikstreuer ist beispielsweise aus der DE 10 2004 030 240 A1 bekannt.

Zur Dosierung des Verteilgutes, wie beispielsweise im Wesentlichen pulver- und/oder partikelförmigem Saatgut und/oder Dünger oder gegebenenfalls auch anderen, z.B. zum Pflanzenschutz dienenden Granulaten, haben sich insbesondere bei pneumatischen Verteilmaschinen Dosiereinheiten bewährt, welche eine drehangetriebene Dosierwalze umfassen, welche in einem Dosiergehäuse mit einem Einlass und einem Auslass gelagert ist, wobei der Einlass üblicherweise an der Oberseite des Dosiergehäuses und der Auslass an dessen Unterseite angeordnet ist. Durch Veränderung der Drehgeschwindigkeit der Dosierwalze, welche in der Regel zwei oder mehr Dosierradsegmente, z.B. in Form von Nocken- und/oder Zellenradsegmenten, aufweist, lässt sich die Dosiermenge des in den zwischen den Nockenbergen angeordneten Nockentälern bzw. in den Zellen angereicherten Verteilgutes auf einfache Weise steuern.

Die Form der Dosierradsegmente muss grundsätzlich an den jeweiligen Saatgut- und/oder Düngertyp angepasst sein, um eine einwandfreie Dosierung mit dem gewünschten Massenstrom unter Vermeidung von auch nur lokalen Unter- oder Überdosierungen zu vermeiden. Dies hängt vornehmlich damit zusammen, dass für partikuläre Düngemittel und für gleichfalls partikuläres, aber demgegenüber feinpartikuläreres sowie insbesondere gegenüber mechanischen Einwirkungen deutlich empfindlicheres Saatgut unterschiedliche Dosierwalzen erforderlich sind. So stellen für Düngemittel vornehmlich die vorgenannten Nockenwalzen das Mittel der Wahl dar, weil die üblicherweise hygroskopischen Düngerpartikel zum Anbacken an der Dosierwalze neigen und von Dosierwalzen in Form von Zellenradwalzen zumindest während des Betriebs praktisch nicht entfernt werden können. Von Nockenwalzen hingegen lassen sich derartige Anbackungen mittels geeigneter Reinigungseinrichtungen auch während des Betriebs entfernen, wobei solche Reinigungseinrichtungen z.B. zwischen die Nockenberge der Nockenwalze und/oder zwischen einzelne Nockenräder oder -scheiben, welche die Nockenwalze bilden, eingreifende Stifte umfassen können, um anhaftende Düngerpartikel von der Nockenwalze "abkratzen" zu können. Für die präzise Dosierung von Saatgut stellen demgegenüber andersartige Dosierwalzen das Mittel der Wahl dar, wie insbesondere Zellenrad- und Zellenradsegmentwalzen sowie Loch- oder Nutenwalzen, deren Mantelfläche mit lochartigen oder, sich insbesondere in Umfangrichtung erstreckenden, nutförmigen Vertiefungen ausgestattet sind, welche das zu dosierende Saatgut schonend aufnehmen können, wobei die einzelnen Zellen der Zellenrad- oder Zellenradsegmentwalzen bzw. die Vertiefungen der Loch- oder Nutenwalzen dadurch gegen das Dosiergehäuse abgedichtet sind, dass sie gegen eine hierzu komplementäre Dichtfläche des Dosiergehäuses anliegen oder mit einem engen Spalt nach Art einer Spaltdichtung von diesem beabstandet sind.

Eine mit einer Mehrzahl an Dosiereinheiten mit drehangetriebenen Dosierwalzen ausgestattete Verteilmaschine ist beispielsweise der EP 2 786 649 B1 zu entnehmen. Um die Dosiereinheiten an verschiedene Verteilgutarten, wie insbesondere verschiedene Saatgut und/oder Düngertypen, anpassen zu können, lassen sich die einzelnen Dosierradsegmente der Dosierwalze, welche in Form von Nocken- und/oder Zellenradsegmenten sowie gegebenenfalls in Form von Loch- oder Nutenwalzen ausgestaltet sind, austauschen. Zu diesem Zweck muss die Dosierwalze jedoch demontiert und in der gewünschten Zusammensetzung der Dosierradsegmente wieder montiert werden, was in handhabungstechnischer Hinsicht einen gewissen Aufwand seitens des Bedieners erfordert.

Die WO 2017/138867 A1 beschreibt eine Dosiereinheit mit einer Dosierwalze aus einem oder zwei Zellenrädern für pulver- oder partikelförmiges Verteilgut in landwirtschaftlichen Verteilmaschinen, insbesondere in Form von pneumatischen Verteilmaschinen, wobei in der Dosiereinheit ein Einsatzstück angeordnet ist, welches zur Abdichtung gegen einen Durchtritt von Luft in das Dosiergehäuse sorgen soll. Im Falle einer zwei Zellenräder umfassenden Dosierwalze ist darüber hinaus ein Absperrschieber vorgesehen, dessen Relativposition in Bezug auf die Zellenräder in Axialrichtung verstellbar ist, um die den Zellenrädern aufgegebene Materialmenge zu verändern und sie auf diese Weise an unterschiedliche Soll-Massenströme an Verteilgut anzupassen. Der Absperrschieber ist nach Art eines Teilrings ausgebildet, welcher eines der Zellenräder gänzlich abdeckt, wenn er in axialer Richtung verlagert wird. Die Betätigung des Absperrschiebers erfolgt insbesondere manuell mittels einer Stellschraube. Von Nachteil erweist sich neben dem in konstruktiver Hinsicht relativ aufwändigen Aufbau der Dosiereinheit insbesondere der Umstand, dass auf diese Weise im Grunde nur eines von zwei Zellenrädern aktiviert bzw. deaktiviert werden kann, während mehrere Dosierradsegmente auf diese Weise nicht unabhängig voneinander zu- bzw. abgeschaltet werden können. Darüber hinaus wäre eine fernbedienbare Betätigung des Absperrschiebers wünschenswert, damit der Bediener die Verteilarbeit nicht unterbrechen muss, wenn er einzelne Dosierradsegmente aktivieren oder deaktivieren möchte.

Aus der US 2016/0120113 A1 ist eine weitere Dosiereinheit für Verteilgut mittels landwirtschaftlicher Maschinen bekannt, welches eine Dosierwalze mit mehreren Dosierradsegmenten umfasst, welche mittels Trennringen voneinander getrennt sind. Um einzelne Dosierradsegmente der Dosierwalze aktivieren bzw. deaktivieren zu können, ist wiederum ein in Axialrichtung verlagerbarer Absperrschieber vorgesehen, welcher sich zwischen dem Einlass des Dosiergehäuses und der Dosierwalze erstreckt und mittels einer Zahnleiste und eines hiermit kämmenden Zahnrades verstellbar ist. Auch in diesem Fall lassen sich stets nur die äußeren Dosierradsegmente mittels des Absperrschiebers aktivieren bzw. deaktivieren und ist eine individuelle Zu- bzw. Abschaltung einzelner - beliebiger - Dosierradsegmente nicht möglich. Zudem erfordert der in Absperrschieber aufgrund seiner der Breite der Dosierwalze etwa entsprechenden Länge einen erheblichen Bauraum, wie er bei gattungsgemäßen Verteilmaschinen nur bedingt zur Verfügung steht. Entsprechendes gilt für eine weitere, in der US 2016/0120113 A1 beschrieben Ausführungsform, dergemäß die Dosierwalze selbst axial verlagerbar ist und mit einem stationären Absperrorgan nach Art einer Hülse zusammenwirkt.

Die EP 2 832 202 A1 beschreibt eine Sämaschine mit einer Dosiereinheit mit einem Dosiergehäuse, in welchem zwei nebeneinander angeordnete Dosierräder gelagert sind, wie einerseits ein Normaldosierrad und andererseits ein Feindosierrad, welche mittels einer lösbar bzw. herausnehmbar an dem Gehäuse angeordneten Zwischenwand voneinander getrennt sind. Einem jeweiligen Dosierrad ist je ein Absperrschieber zugeordnet, um wahlweise die Dosierung des einen oder des anderen Dosierrades oder auch beider Dosierräder zu unterbrechen. Die unabhängig voneinander manuell betätigbaren Absperrschieber sind entlang des Einlasses des Dosiergehäuses etwa tangential in Bezug auf ein jeweiliges Dosierrad verschiebbar. Auf diese Weise ist zwar eine individuelle Aktivierung bzw. Deaktivierung eines jeweiligen Dosierrades zur Öffnen bzw. Schließen eines jeweiligen Absperrschiebers möglich, doch erfordern die Absperrschieber wiederum einen sehr großen Bauraum, welcher bei gattungsgemäßen Verteilmaschinen nur sehr begrenzt zur Verfügung steht. Entsprechendes gälte für einen motorischen Antrieb der Absperrschieber, welcher die Druckschrift jedoch nicht vorsieht. Eine ähnliche Dosiereinheit geht aus der EP 2 832 203 A1 hervor.

Aus der US 2012/0174844 A1 ist eine Dosiereinheit für Saatgut mit einem unterhalb eines Einlauftrichters angeordneten Dosiergehäuse mit einem Einlass und einem Auslass gemäß dem Oberbegriff des Anspruchs 1 bekannt. In dem Dosiergehäuse ist eine Dosierwalze drehbar gelagert, welche eine Mehrzahl an auf einer Welle sitzenden Dosierradsegmenten umfasst, wobei die einzelnen Dosierradsegmente jeweils einem Paar Verteilerleitungen zugeordnet sind. Einem jeweiligen Dosierradsegment ist jeweils ein unabhängig voneinander betätigbarer Absperrschieber zugeordnet, welcher jeweils einen an einer Konsole unterhalb des Dosiergehäuses angelenkten Betätigungshebel und einen an dessen freiem Ende angeordneten, gekrümmten Innenumfangsabschnitt umfasst, welcher zwischen einer Öffnungsstellung und einer Schließstellung hin und her schwenkbar ist. Abgesehen von der in konstruktiver Hinsicht relativ aufwändigen Ausgestaltung erfordert auch dies einen sehr großen Bauraum.

Die US 2017/0118905 A1 beschreibt ein Dosierorgan zum Ausbringen von Dünger oder Saatgut für eine landwirtschaftliche Verteilmaschine, welches ein Dosiergehäuse mit einer Mehrzahl an Kammern aufweist, in welchen jeweils ein Dosierradsegment der Dosierwalze gelagert ist. Um einzelne Dosierradsegmente von dem zugeführten Verteilgutstrom abzutrennen, sind Absperrelemente vorgesehen, welche zwischen dem Einlass des Dosiergehäuses und einem jeweiligen, in einer jeweiligen Kammer umlaufenden Dosierradsegment angeordnet sind. Die Absperrelemente können als Clips oder in Form von auswechselbaren Rahmenteilen ausgebildet sein und müssen manuell montiert bzw. demontiert werden, was sich als relativ aufwändig und mühsam erweist.

Aus der US 5 024 356 A ist eine weitere Dosiereinheit bekannt, welche insbesondere für partikelförmige Verteilgüter, wie z.B. Dünger, vorgesehen ist. Die Dosiereinheit umfasst ein in einem Dosiergehäuse gelagertes, gesteuert motorisch drehangetriebenes Dosierrad, wobei das Dosiergehäuse mit einem oberen Einlass und einem unteren Auslass sowie mit einem dem Einlass zugeordneten Absperrschieber ausgestattet ist. Letzterer weist einen im Wesentlichen kreisbogenförmigen Innenumfang auf und dient zur Veränderung des Öffnungsquerschnittes des Einlasses sowie zum gänzlichen Absperren des gesamten Einlassquerschnittes und ist unmittelbar an den Mantelumfang des Dosierrades angrenzend in dem Dosiergehäuse gelagert. Dies geschieht mittels Lagern, koaxial zu dem Dosierrad gelagert sind. Eine koaxial zu dem Dosierrad angeordnete Hohlwelle des Absperrschiebers steht mit einem stirnseitigen motorischen Antrieb in Verbindung, um den Absperrschieber in die gewünschte Position zu bringen.

Ferner sind anstelle von Absperrschiebern im Innern des Dosiergehäuses angelenkte Absperrklappen bekannt (DE 10 2016 208 320 A1), deren äußere Antrieb sich jedoch ebenfalls als aufwändig erweist, wobei derartige Absperrklappen insbesondere den entscheidenden Nachteil besitzen, dass sie beim Schließen bei hohen Schließkräften das zwischen der Absperrklappe und der Dosierwalze befindliche Verteilgut verdrängen müssen, was in der Praxis mit relativ langen Schließzeiten und einer teilweisen Zerstörung von empfindlichen Verteilgütern, wie Saatgut, einhergeht.

Der Erfindung liegt die Aufgabe zugrunde, eine Dosiereinheit der eingangs genannten Art sowie eine mit wenigstens einer solchen Dosiereinheit ausgestattete Verteilmaschine unter zumindest weitestgehender Vermeidung der vorgenannten Nachteile auf einfache und kostengünstige Weise dahingehend weiterzubilden, dass bei einem sehr kompakten Aufbau der Dosiereinheit eine individuelle Aktivierung der einzelnen Dosierradsegmente der Dosierwalze mittels eines jeweiligen Absperrschiebers unabhängig voneinander möglich ist, wobei insbesondere nicht nur eine manuelle, sondern auch eine fernbedienbare Betätigung der Absperrschieber gewährleistet sein sollte.

Erfindungsgemäß wird diese Aufgabe durch eine Dosiereinheit mit den Merkmalen von Anspruch 1 gelöst. Insbesondere wird die Aufgabe dadurch gelöst, dass die Absperrschieber im Innern des Dosiergehäuses gelagert sind und eine in Axialrichtung geneigte Sperrfläche aufweisen, wobei die Absperrschieber einen im Wesentlichen kreisbogenförmigen Innenumfang aufweisen und in Umfangsrichtung eines jeweiligen Dosierradsegmentes der Dosierwalze zwischen einer Absperrstellung, in welcher sie zwischen dem Einlass und/oder dem Auslass und dem jeweiligen Dosierradsegment angeordnet sind und das jeweilige Dosierradsegment außer Betrieb setzen, und wenigstens einer Öffnungsstellung, in welcher der Einlass und der Auslass mit dem jeweiligen Dosierradsegment in Verbindung stehen, betätigbar sind.

Zur Lösung dieser Aufgabe sieht die Erfindung bei einer Verteilmaschine der eingangs genannten Art, wie insbesondere bei einer Sämaschine oder einem Düngerstreuer, vor, dass sie mit wenigstens einer derartigen Dosiereinheit ausgestattet ist.

Die erfindungsgemäße Ausgestaltung ermöglicht aufgrund dessen, dass einem jeweiligen Dosierradsegment ein unabhängig voneinander betätigbarer Absperrschieber zugeordnet ist, dessen Breite an die axiale Breite eines jeweiligen Dosierradsegmentes angepasst ist, eine individuelle Aktivierung bzw. Deaktivierung der einzelnen Dosierradsegmente unabhängig voneinander einzeln oder in Gruppen, so dass stets dem gewünschten Massenstrom an Verteilgut Rechnung getragen werden kann, ohne die Drehzahl der Dosierwalze übermäßig zu vermindern oder zu erhöhen. Während die Absperrschieber beim Stand der Technik einen großen Bauraum erfordern, um sie vornehmlich außerhalb des Dosiergehäuses translatorisch oder schwenkbar zwischen ihrer Öffnungs- und ihrer Absperr- bzw. Schließstellung verlagern zu können, sorgt die erfindungsgemäße Ausgestaltung aufgrund der rotatorisch um den Umfang eines jeweiligen Dosierradsegmentes der Dosierwalze verlagerbaren, mit einem etwa kreisbogenförmigen Innenquerschnitt versehenen Absperrschieber, welche sich zwischen dem Einlass und/oder dem Auslass des Dosiergehäuses und der Dosierwalze erstrecken, eine größtmögliche Kompaktheit der Dosiereinheit, welche ihr einen Einbau in praktisch beliebige bekannte Verteilmaschinen einschließlich pneumatischer Verteilmaschinen mit sehr begrenztem Bauraum ermöglicht, wobei auch ein Austausch einer herkömmlichen Dosiereinheit gegen eine erfindungsgemäße Dosiereinheit möglich wird. Im Hinblick auf eine größtmögliche Kompaktheit sieht die Erfindung dabei vor, dass die Absperrschieber im Innern des Dosiergehäuses gelagert sind, so dass lediglich etwaige Handhaben zur Betätigung der Absperrschieber und/oder gegebenenfalls etwaige Antriebe der Absperrschieber außerhalb des Dosiergehäuses angeordnet, beispielsweise an diesem befestigt, sein können.

Die Absperrschieber weisen erfindungsgemäße eine in Axialrichtung geneigte Absperrfläche auf, wobei der Außenumfang der Absperrfläche eines jeweiligen Absperrschiebers insbesondere von einer jeweiligen Außenseite des Dosiergehäuses nach innen abnimmt. Auf diese Weise wird die Anreicherung von Rückständen von Verteilgut auf der dem Einlass des Dosiergehäuses zugewandten Oberseits eines jeweiligen Absperrschiebers verhindert, indem das Verteilgut entlang der geneigten Absperrflächen von in die Absperrstellung versetzten Absperrschiebern in Axialrichtung der Dosierwalze entlanggleiten kann, bis es durch einen geöffneten Absperrschieber in das diesem zugeordnete Dosierradsegment der Dosierwalze hineinfällt.

Um zu verhindern, dass während eines längeren Außerbetriebsetzens einzelner Dosierradsegmente der Dosierwalze mittels eines oder mehrerer Absperrschieber Verteilgut in der Dosierwalze zurückbleibt, kann es sich als vorteilhaft erweisen, wenn die Absperrschieber zwischen der Absperrstellung, in welcher sie zwischen dem Einlass und dem jeweiligen Dosierradsegment angeordnet sind und das jeweilige Dosierradsegment außer Betrieb setzen, und der wenigstens einen Öffnungsstellung, in welcher der Einlass mit dem jeweiligen Dosierradsegment in Verbindung steht, betätigbar sind. Auf diese Weise vermögen die zwischen dem Einlass des Dosiergehäuses und der Dosierwalze wirksamen Absperrschieber den Auslass stets freizulassen, so dass das jeweilige Dosierradsegment stets über den Auslass entleert werden kann.

In vorteilhafter Ausgestaltung kann vorgesehen sein, dass ein jeweiligen Absperrschieber mittels je einer Handhabe, wie beispielsweise in Form eines an dem Absperrschiebers angeordneten Hebels oder dergleichen, unabhängig voneinander betätigbar ist, um die Absperrschieber unabhängig voneinander zwischen ihrer Öffnungsstellung und ihrer Absperr- bzw. Schließstellung hin und her verlagern zu können. Die Handhabe kann dabei insbesondere das Dosiergehäuse durchsetzen, welches zu diesem Zweck beispielsweise je ein, einer jeweiligen Handhabe zugeordnetes Langloch aufweist, innerhalb dessen die Handhabe bewegbar ist. Während eine solche manuelle Betätigung der Absperrschieber ausschließlich vorgesehen sein kann, kann sie in vorteilhafter Ausgestaltung auch nur zum Zwecke einer Notbetätigung der im Übrigen mit einem fernbedienbaren Antrieb ausgestatteten Absperrschieber dienen.

Demgemäß kann in vorteilhafter Ausgestaltung vorgesehen sein, dass einem jeweiligen Absperrschieber ein unabhängig voneinander steuer- und/oder regelbarer, insbesondere elektromotorischer oder aktuatorischer, Antrieb zugeordnet ist, wobei zu eine solchen fernbedienbaren Antrieb der Absperrschieber grundsätzlich beliebige bekannte Antriebsorgane in Betracht kommen, wie beispielsweise hydraulische, pneumatische oder elektrische Kolben-/Zylindereinheit oder, insbesondere elektrische, Motoren, wie z.B. Servomotoren etc.

Eine besonders robuste und mit hoher Verstellgeschwindigkeit eines jeweiligen Absperrschiebers betätigbare Antriebsanordnung kann beispielsweise derart ausgestaltet sein, dass der Antrieb eines jeweiligen Absperrschiebers je eine Gewindespindel aufweist, welche von einem Antriebsmotor in Drehung versetzbar und entlang welcher eine mit der Gewindespindel im Eingriff stehende Spindelmutter geführt ist, welche mit einem jeweiligen Absperrschieber in Verbindung steht, um den Absperrschieber durch Rotieren der Gewindespindel zu betätigen. Die Verbindung eines jeweiligen Absperrschiebers mit der Spindelmutter kann hierbei beispielsweise mittels eines einen jeweiligen Absperrschiebers mit einer jeweiligen Spindelmutter verbindenden Betätigungsmittels, wie eines Hebels oder dergleichen, erfolgen.

Bei einer solchen Ausführungsform kann zweckmäßigerweise die Spindelmutter einen sich im Wesentlichen in Radialrichtung der Gewindespindel erstreckenden Schlitz aufweisen, in welchem der Absperrschieber, z.B. über dessen Betätigungsmittel, an die Spindelmutter angelenkt ist, um Abstandsver- änderungen infolge der translatorischen Verlagerung der Spindelmutter entlang der Gewindespindel gegenüber der rotatorischen Verlagerung des Absperrschiebers in Umfangsrichtung der Dosierwalze zu kompensieren.

Gemäß einer Ausführungsvariante der erfindungsgemäßen Dosiereinheit kann der Antrieb eines jeweiligen Absperrschiebers zum Zwecke eines möglichst einfachen Aufbaus der Dosiereinheit bei einer gleichwohl sehr hohen Kompaktheit beispielsweise außerhalb des Dosiergehäuses angeordnet sein, wobei zur Wirkverbindung eines jeweiligen Antriebs mit einem jeweiligen Absperrschieber insbesondere ein einem jeweiligen Absperrschieber zugeordnetes Langloch in dem Dosiergehäuse dienen kann, welches von einem einen jeweiligen Absperrschieber mit einem jeweiligen Antrieb verbindenden Betätigungsmittel, wie einem Hebel oder dergleichen, durchgriffen ist. Umfasst der Antrieb eines jeweiligen Absperrschiebers hierbei je eine Gewindespindel der oben genannten Art, so kann diese dabei insbesondere an einer Außenseite des Dosiergehäuses gelagert sein. Stattdessen kann gemäß einer Ausführungsvariante der erfindungsgemäßen Dosiereinheit auch vorgesehen sein, dass der Antrieb eines jeweiligen Absperrschiebers innerhalb des Dosiergehäuses angeordnet ist, so dass er vor äußeren Einwirkungen geschützt und praktisch in die Dosiereinheit integriert ist. Umfasst der Antrieb eines jeweiligen Absperrschiebers hierbei je eine Gewindespindel der oben genannten Art, so kann diese dabei insbesondere innenseitig des Dosiergehäuses gelagert sein.

In Bezug auf die erfindungsgemäße Lagerung der Absperrschieber in Umfangsrichtung der Dosierwalze im Innern des Dosiergehäuses kann gemäß einer in konstruktiver Hinsicht einfachen und kostengünstigen Ausgestaltung vorgesehen sein, dass wenigstens ein stirnseitiger Absperrschieber, insbesondere beide stirnseitigen Absperrschieber, in einer Führungsnut im Innern einer Stirnwand des Dosiergehäuses gelagert ist bzw. sind, so dass die Führung zumindest des bzw. der stirnseitigen Absperrschieber(s) in das Dosiergehäuse integriert ist bzw. sind. Mit "stirnseitig" sind in diesem Zusammenhang die außenseitigen bzw. - in Bezug auf die Dosierradsegmente der Dosierwalze - axial endständigen Absperrschieber angesprochen.

Wie bereits angedeutet, bietet sich die Erfindung aufgrund der individuellen Betätigung der Absperrschieber unabhängig voneinander insbesondere für Dosiereinheiten an, deren Dosierwalze wenigstens drei oder auch mehrere Dosierradsegmente aufweist, wobei einem jeweiligen Dosierradsegment je ein Absperrschieber zugeordnet ist, so dass beliebige Dosierradsegmente oder beliebige Gruppen von Dosierradsegmenten mittels der jeweiligen Absperrschieber unabhängig voneinander aktiviert und deaktiviert werden können.

Sofern die Dosierwalze der Dosiereinheit wenigstens drei Dosierradsegmente aufweist, kann im Hinblick auf eine in konstruktiver Hinsicht einfache und kostengünstige Lagerung eines mittleren Absperrschiebers oder mehrerer mittlerer Absperrschieber vorgesehen sein, dass wenigstens ein, wenigstens einem mittleren Dosierradsegment zugeordneter Absperrschieber an einer im Innern des Dosiergehäuses angeordneten Führung gelagert ist, welche eine zu dem im Wesentlichen kreisbogenförmigen Innenumfang des Absperrschiebers komplementäre Führungsfläche aufweist.

Um für eine einfache Montage und Demontage der Dosiereinheit, z.B. zum Zwecke der Reinigung oder Wartung, zu sorgen, kann die im Innern des Dosiergehäuses angeordnete Führung des dem wenigstens einen mittleren Dosierradsegment zugeordneten Absperrschiebers vorzugsweise an einem Dosiergehäuseabschnitt angeordnet ist, welcher mit wenigstens einer Stirnwand, insbesondere mit beiden Stirnwänden, des Dosiergehäuses lösbar verbunden, z.B. verschraubt, ist.

Alternativ oder zusätzlich zu einer Lagerung eines oder mehrerer mittleren Absperrschieber in einem separaten Dosiergehäuseabschnitt kann es sich als vorteilhaft erweisen, wenn wenigstens ein, wenigstens einem mittleren Dosierradsegment zugeordneter Absperrschieber an einem in Axialrichtung benachbarten Absperrschieber gelagert ist, wobei die in Axialrichtung benachbarten Absperrschieber insbesondere zueinander komplementärer Führungsflächen aufweisen. Benachbarte Absperrschieber können dabei folglich derart miteinander im Eingriff stehen, dass sie mittels der zueinander komplementären Führungsflächen einerseits einander zu führen vermögen, andererseits aber gleichwohl unabhängig voneinander zwischen ihrer Öffnungs- und ihrer Absperrstellung in Umfangsrichtung der Dosierwalze verlagerbar sind.

Um zu verhindern, dass einem jeweiligen Dosierradsegment über einen geöffneten Absperrschieber aufgegebenes Verteilgut in ein benachbartes Dosierradsegment, dessen Absperrschieber sich in der Absperrstellung befindet, hineinfallen und auf diese Weise Fehldosierungen verursachen kann, können die Dosierradsegmente der Dosierwalze vorzugsweise an ihren einander zugewandten axialen Enden mittels einer ringförmigen Wandung voneinander getrennt sein. Die ringförmigen Wandungen können dabei beispielsweise Teile der Dosierwalze und zwischen den einzelnen Dosierradsegmenten angeordnet sein (die Dosierwalze mit den verschiedenen Dosierradsegmenten ist in diesem Fall z.B. einstückig gefertigt), oder es können separate, auf eine Welle der Dosierwalze aufsteckbare ringförmige Wandungen vorgesehen sein, welche zwischen separaten Dosierradsegmenten angeordnet sind (die Dosierwalze setzt sich in diesem Fall z.B. aus einzelnen, auf die Welle drehfest aufbringbaren Dosierradsegmenten zusammen, zwischen welchen die ihrerseits separaten ringförmigen Wandungen angeordnet sind).

Wie bereits angedeutet, können die Dosierradsegmente der Dosierwalze von Nocken- und/oder Zellenrädern einschließlich Loch- und/oder Nutenwalzensegmenten gebildet sein, welche insbesondere ein unterschiedliches Dosiervolumen aufweisen, um einzelne oder Gruppen von Dosierradsegmenten mittels der Absperrschieber individuell entsprechend dem gewünschten Massenstrom des jeweils auszubringenden Verteilguttyps aktivieren bzw. deaktivieren zu können. Dabei kann es sich als zweckmäßig erweisen, wenn es sich bei wenigstens einem Dosierradsegment um ein Normaldosierradsegment handelt, während es sich bei wenigstens einem weiteren Dosierradsegment um ein Feindosierradsegment handelt.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Seitenansicht einer Ausführungsform einer pneumatischen Verteilmaschine in Fahrtrichtung betrachtet;
- Fig. 2: einen schematische perspektivische Ansicht durch eine Ausführungsform einer Dosiereinheit der Verteilmaschine gemäß Fig. 1;
- Fig. 3: eine schematische Draufsicht auf die Dosiereinheit gemäß Fig. 2 von oben;
- Fig. 4: eine schematische Seitenansicht der Dosiereinheit gemäß Fig. 2 und 3;
- Fig. 5: einen schematischen Vertikalschnitt durch die Dosiereinheit gemäß Fig. 2 bis 4 entlang der Schnittebene V-V der Fig. 4;
- Fig. 6: eine schematische perspektivische Explosionsansicht der Dosiereinheit gemäß Fig. 2 bis 5;
- Fig. 7: eine der Fig. 6 entsprechende Explosionsansicht der Dosiereinheit, aber von der gegenüber Fig. 6 entgegengesetzten Seite betrachtet;
- Fig. 8A: eine schematische perspektivische Ansicht der in Fig. 6 rechten bzw. in Fig. 7 linken Stirnwand des Dosiergehäuses der Dosiereinheit;
- Fig. 8B: eine schematische Seitenansicht der Stirnwand des Dosiergehäuses gemäß Fig. 8A von der Innenseite des Dosiergehäuses betrachtet;
- Fig. 8C: eine schematische Seitenansicht der Stirnwand des Dosiergehäuses gemäß Fig. 8A und 8B von der in Fig. 8B rechten Seite betrachtet;
- Fig. 9A: eine schematische perspektivischen Ansicht des in Fig. 6 und 7 mittleren Dosiergehäuseabschnittes des Dosiergehäuses des Dosiereinheit, welcher mit den Stirnwänden des Dosiergehäuses lösbar verbunden ist;
- Fig. 9B: eine schematische Seitenansicht des mittleren Dosiergehäuseabschnittes gemäß Fig. 9A von der Innenseite des Dosiergehäuses betrachtet;
- Fig. 9C: eine schematische Seitenansicht des mittleren Dosiergehäuseabschnittes gemäß Fig. 9A und 9B von der in Fig. 9B linken Seite betrachtet;
- Fig. 10A: eine schematische perspektivische Ansicht der in Fig. 6 linken bzw. in Fig. 7 rechten Stirnwand des Dosiergehäuses der Dosiereinheit;
- Fig. 10B: eine schematische Seitenansicht der Stirnwand des Dosiergehäuses gemäß Fig. 10A von der Innenseite des Dosiergehäuses betrachtet;
- Fig. 10C: eine schematische Seitenansicht der Stirnwand des Dosiergehäuses gemäß Fig. 10A und 10B von der in Fig. 10B rechten Seite betrachtet;
- Fig. 11A: eine schematische perspektivische Detailansicht des in Fig. 6 rechten bzw. in Fig. 7 linken Absperrschiebers;
- Fig. 11B: eine schematische Seitenansicht des Absperrschiebers gemäß Fig. 11A in Axialrichtung der Dosierwalze betrachtet;
- Fig. 11C: eine schematische Seitenansicht des Absperrschiebers gemäß Fig. 11A und 11B in Radialrichtung der Dosierwalze betrachtet;
- Fig. 12A: eine schematische perspektivische Detailansicht des in Fig. 6 und Fig. 7 mittleren Absperrschiebers;
- Fig. 12B: eine schematische Seitenansicht des Absperrschiebers gemäß Fig. 12A in Axialrichtung der Dosierwalze betrachtet;
- Fig. 12C: eine schematische Seitenansicht des Absperrschiebers gemäß Fig. 12A und 12B in Radialrichtung der Dosierwalze betrachtet;
- Fig. 13A: eine schematische perspektivische Detailansicht des in Fig. 6 linken bzw. in Fig. 7 rechten Absperrschiebers;
- Fig. 13B: eine schematische Seitenansicht des Absperrschiebers gemäß Fig. 13A in Axialrichtung der Dosierwalze betrachtet;
- Fig. 13C: eine schematische Seitenansicht des Absperrschiebers gemäß Fig. 13A und 13B in Radialrichtung der Dosierwalze betrachtet;
- Fig. 14A: eine schematische perspektivische Ansicht eines Wandteils des Dosiergehäuseabschnittes des Dosiergehäuses der Dosiereinheit gemäß Fig. 9A bis 9C;
- Fig. 14B: eine schematische Seitenansicht des Wandteils gemäß Fig. 14A von der Innenseite des Dosiergehäuses in Radialrichtung der Dosierwalze betrachtet;
- Fig. 14C: eine schematische Seitenansicht des Wandteils gemäß Fig. 14A und 14B in Axialrichtung der Dosierwalze betrachtet;
- Fig. 15A: eine schematische perspektivische Detailansicht Dosierwalze der Dosiereinheit; und
- Fig. 15B: eine schematische Seitenansicht der Dosierwalze gemäß Fig. 15A.

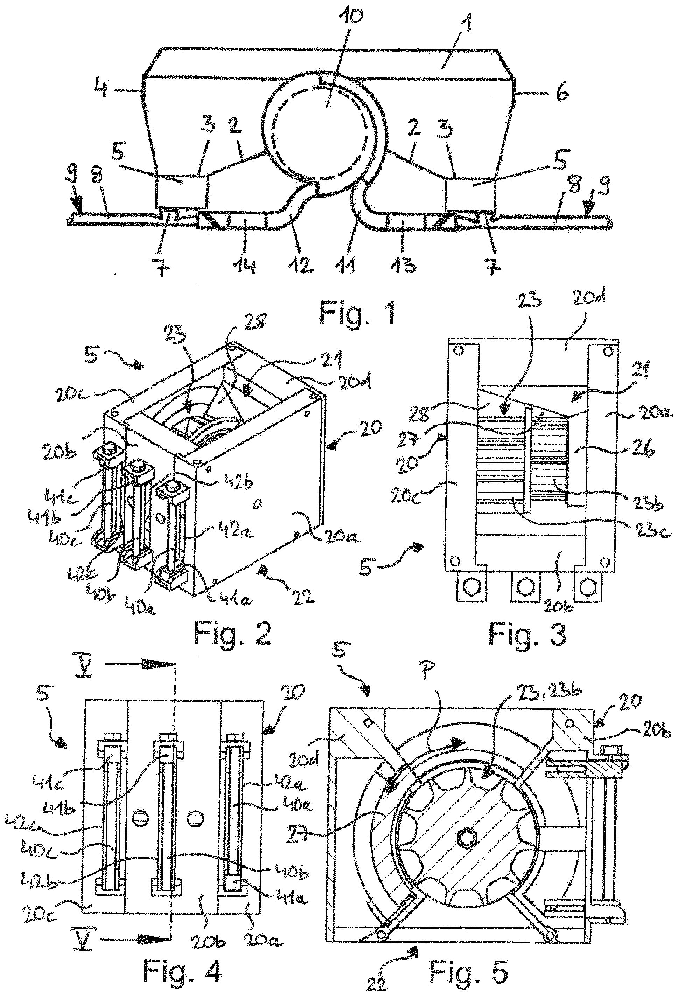

Die in Fig. 1 schematisch wiedergegebene Verteilmaschine in Form einer pneumatischen Streu- und/oder Sämaschine weist einen Vorratsbehälter 1 mit zwei Behälterteilen auf, welche je einen sich konisch nach unten verjüngenden Boden 2 besitzen, welcher zu je eine Auslauföffnung 3 abfällt. Die seitlichen Begrenzungen des Vorratsbehälters 1 sind von seitlichen Wandungen 4 gebildet, welche sich gleichfalls in Richtung der jeweiligen Auslauföffnung 3 nach unten verjüngen. An die Auslauföffnungen 3 schließt sich nach unten je eine Dosiereinheit 5 an, wie sie weiter unten unter Bezugnahme auf die Fig. 2 ff im Einzelnen erläutert ist. Unterhalb der Dosiereinheiten 5 angeordnete Auffangschalen 7 münden in einen Abschnitt 8 je einer Förderleitung 9, welche in entgegengesetzte Richtungen nach außen führen. Die pneumatische Verteilmaschine umfasst ferner ein Gebläse 10, welches beispielsweise im zentralen Bereich ihrer Längsachse positioniert ist. Aus je einem Druckstutzen 11, 12 des Gebläses 10 führt je ein Luftverteiler 13, 14 zu den Abschnitten 8 der Förderleitungen 9, um das dort zudosierte Verteilgut, wie insbesondere Streu- oder Saatgut, aufzunehmen. Während in der schematischen Darstellung der Fig. 1 nur je eine Förderleitung 9 gezeigt ist, sei darauf hingewiesen, dass im Bereich des Übergangs zwischen den Luftverteilern 13, 14 zu den Förderleitungen 9 insbesondere Injektoren (nicht gezeigt) angeordnet sein können, mittels welcher der aus den Druckstutzen 11, 12 zugeführte Gasstrom in eine Mehrzahl an Förderleitungen (nicht gezeigt), wie je ein Bündel von Förder- bzw. Verteilerleitungen, überführt wird, welche das Streu- oder Saatgut schließlich pneumatisch bis zu an deren Ende angeordnete Verteilorgane (ebenfalls nicht gezeigt) überführen, welche **z.B.** von Säscharen oder Prallplatten gebildet sind, auf welche das Verteilgut auftrifft, um von dort im Wesentlichen fächerförmig auf dem Boden abgelegt werden zu können. Die Verteilorgane können an sich beidseits quer zur Fahrtrichtung (in Fig. 1 nach rechts und links) erstreckenden Auslegern (nicht gezeigt) angeordnet sein, wobei die Verteilorgane mit unterschiedlichen seitlichen Abständen von dem Vorratsbehälter 1 angeordnet sind und jedem Verteilorgan je eine Förder- bzw. Verteilerleitung eines Bündels von Förder- bzw. Verteilerleitungen zugeordnet ist.

In den Fig. 2 bis 7 ist ein Ausführungsbeispiel einer Dosiereinheit 5 der Verteilmaschine gemäß Fig. 1 dargestellt. Die Dosiereinheit 5 umfasst ein Dosiergehäuse 20, welches z.B. im Wesentlichen kasten- bzw. quaderförmig ausgestaltet ist und einen an dessen Oberseite angeordneten Einlass 21 (vgl. die Fig. 2 und 3) sowie einen an dessen Unterseite angeordneten Auslass 22 (vgl. die Fig. 4) aufweist. In dem zentralen Bereich des Dosiergehäuses 20 ist eine Dosierwalze 23 drehbar gelagert, welche sich zum Ausbringen von verschiedenartigen Typen von Verteilgut, wie Saatgut und/oder Dünger, eignet und in herkömmlicher Weise drehfest auf einer zentralen Welle (nicht gezeigt) montiert sein kann, welche wiederum mit einem gleichfalls nicht zeichnerisch wiedergegebenen, außerhalb des Dosiergehäuses 20 angeordneten, steuerbaren Drehantrieb in Verbindung steht, um sie mit der gewünschten Drehzahl in Rotation versetzen zu können.

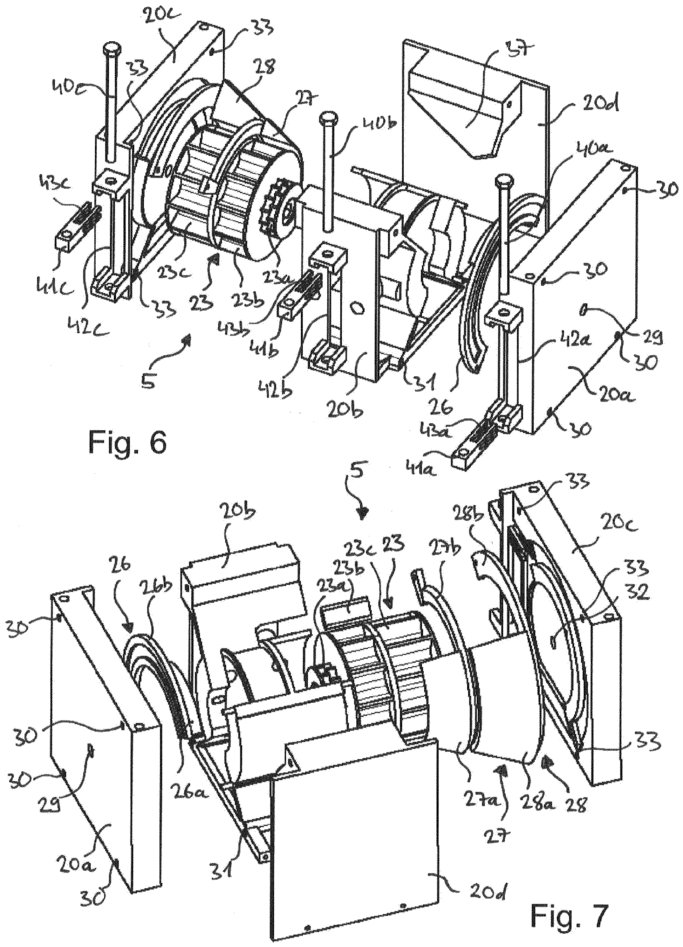

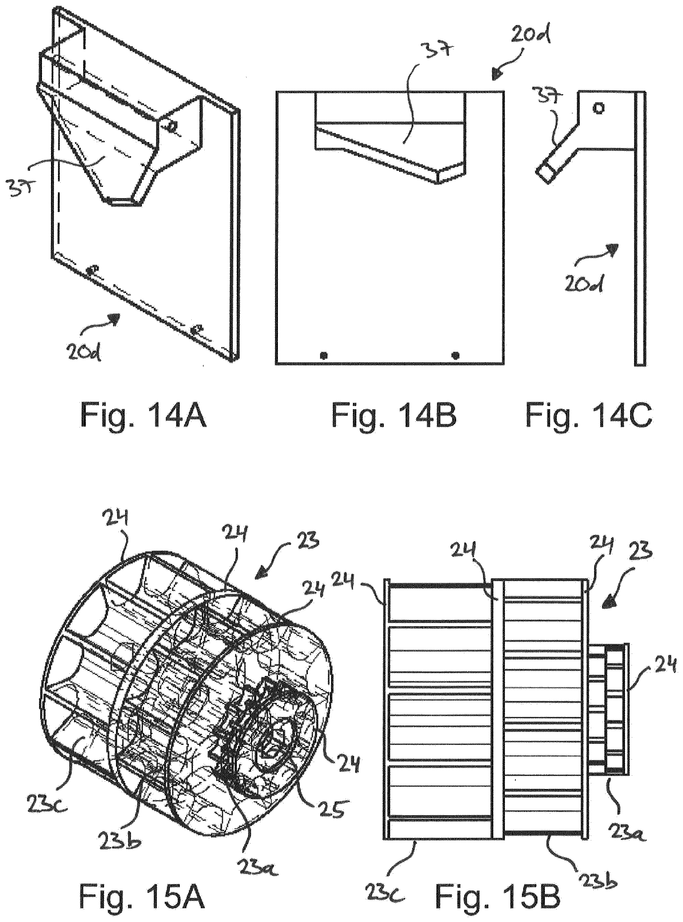

Wie insbesondere den Fig. 15A und 15B in Verbindung mit den Fig. 6 und 7 zu entnehmen ist, umfasst die Dosierwalze 23 beim vorliegenden Ausführungsbeispiel zu diesem Zweck mehrere - hier drei - Dosierradsegmente 23a, 23b, 23c, welche beispielsweise von Nocken- oder Zellenradsegmenten gebildet sind und ein unterschiedliches Dosiervolumen besitzen. Im vorliegenden Fall ist das Dosierradsegment 23a von einem Feindosierradsegment gebildet, während die Dosierradsemente 23b und 23c von Normaldosierradsegmenten gebildet sind, aber gleichwohl - z.B. aufgrund ihrer unterschiedlichen Breite - ein unterschiedliches Dosiervolumen aufweisen, so dass mit je einem der beiden Dosierradsegmente 23b, 23c oder mit beiden Dosierradsegmenten 23b, 23c gemeinsam sehr unterschiedlichen Massenströmen an Verteilgut Rechnung getragen werden kann. Die Dosierradsegmente 23a, 23b, 23c sind jeweils an ihren beiden axialen Enden von einer ringförmigen Wandung 24 voneinander getrennt, um zu verhindern, dass über den Einlass 21 (vgl. die Fig. 2 und 3) dem Dosiergehäuse 20 aufgegebenes Verteilgut von einem Dosierradsegment 23a, 23b, 23c in ein benachbartes Dosierradsegment 23a, 23b, 23c gelangen kann. Die Dosierwalze 23 kann dabei einteilig gefertigt und über eine zentrale Profilbohrung 25 (vgl. die Fig. 15A) drehfest auf der diese durchsetzenden, zentralen Welle (nicht gezeigt) sitzen, oder die Dosierwalze 23 weist separate Dosierradsegmente 23a, 23b, 23c und/oder separate ringförmige Wandungen 24 auf, welche einzeln auf der Welle (nicht gezeigt) montiert sind, wobei zumindest die Dosierradsegmente 23a, 23b, 23c mittels entsprechender Profilbohrungen 25 drehfest mit der Welle im Eingriff stehen.

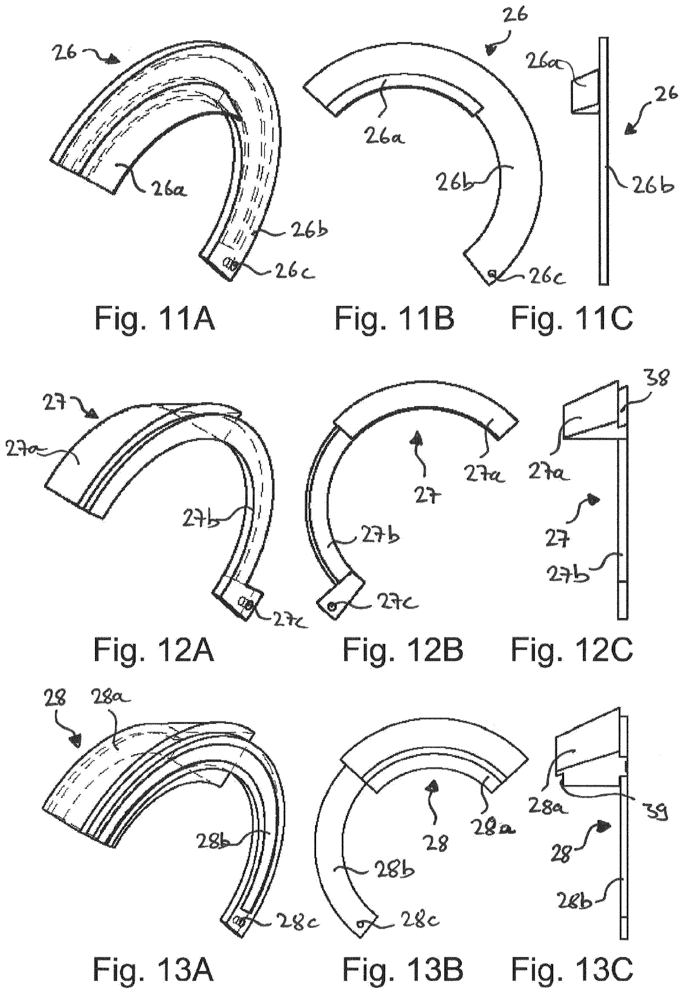

Um einzelne Dosierradsegmente 23a, 23b, 23c der Dosierwalze 23 der Dosiereinheit 5 unabhängig voneinander aktivieren bzw. deaktivieren zu können, ist einem jeden Dosierradsegment 23a, 23b, 23c je ein unabhängig voneinander betätigbarer Absperrschieber 26, 27, 28 zugeordnet, welche jeweils einen etwa kreisbogenförmigen, insbesondere an den Außenumfang eines jeweiligen Dosierradsegmentes 23a, 23b, 23c der Dosierwalze 23 angepassten Innenumfang besitzen und jeweils in Umfangsrichtung (vgl. den Pfeil P der Fig. 5) eines jeweiligen Dosierradsegmentes 23a, 23b, 23c der Dosierwalze 23 zwischen einer Absperrstellung (vgl. hierzu den in Fig. 3 rechten Absperrschieber 26), in welcher sie zwischen dem Einlass 21 und dem jeweiligen Dosierradsegment 23a, 23b, 23c angeordnet sind und dieses Dosierradsegment außer Betrieb setzen, und einer Öffnungsstellung (vgl. hierzu die in Fig. 3 linken Absperrschieber 27, 28), in welcher der Einlass 21 mit dem jeweiligen Dosierradsegment in Verbindung steht, betätigbar sind. Die Absperrschieber 26, 27, 28, deren im Innern des Dosiergehäuses 20 der Dosiereinheit 5 am besten aus den Explosionsdarstellungen der Fig. 6 und 7 hervorgeht, sind jeweils einzeln nochmals Gegenstand der Fig. 11 bis 13.

Wie dort erkennbar, umfasst ein jeder Absperrschieber 26, 27, 28 bei dem gezeigten Ausführungsbeispiel jeweils ein Absperrteil 26a, 27a, 28a mit einem kreisbogenförmigen Innenumfang, welches eine an die axiale Breite eines jeweiligen Dosierradsegmentes 23a, 23b, 23c der Dosierwalze 23 angepasste Breite aufweist und sich um einen hinreichenden Umfangsabschnitt erstreckt, um den dem Einlass 21 des Dosiergehäuses 20 exponierten Umfangsabschnitt eines jeweiligen Dosierradsegmentes 23a, 23b, 23c der Dosierwalze 23 gänzlich zu überdecken, wenn sich der Absperrschieber 26, 27, 28 in seiner Absperr- bzw. Schließstellung befindet. Darüber hinaus umfasst ein jeder Absperrschieber 26, 27, 28 jeweils ein an einer Umfangsseite eines jeweiligen Absperrteils 26a, 27a, 28a befestigtes Lagerteil 26b, 27b, 28b, welches gleichfalls einen kreisbogenförmigen Innenumfang besitzt und zur Lagerung eines jeweiligen Absperrschiebers 26, 27, 28 im Innern des Dosiergehäuses 20 dient. Wie weiter unten noch näher erläutert, umfasst das Lagerteil 26b, 27b, 28b eines jeweiligen Absperrschiebers 26, 27, 28 ferner ein Befestigungsmittel - hier in Form einer Bohrung 26c, 27c, 28c - welche zum Angriff eines Betätigungsmittels dient, um einen jeweiligen Absperrschieber 26, 27, 28 im Umfangsrichtung eines jeweiligen Dosierradsegmentes 23a, 23b, 23c verlagern zu können. Die Absperrteile 26a, 27a, 28a der Absperrschieber 26, 27, 28 besitzen beim vorliegenden Ausführungsbeispiel ferner jeweils eine in Axialrichtung der Dosierwalze 23 geneigte, dem Einlass 21 des Dosiergehäuses 20 zugewandte Absperrfläche, wobei der Außenumfang dieser Absperrfläche eines jeweiligen Absperrschiebers 26, 27, 28 von einer jeweiligen Außenseite des Dosiergehäuses 20 nach innen abnimmt, damit etwaige Rückstände an Verteilgut nicht auf einem oder mehreren, in die Absperrstellung verbrachten Absperrschieber(n) 26, 27, 28 zurückbleiben, sondern abfließen können. Wie am besten in der Fig. 6 sowie in den Fig. 11C, 12C und 13C erkennbar, besitzt das Absperrteil 26a, 27a, 28a eines jeweiligen Absperrschiebers 26, 27, 28 zu diesen Zweck beispielsweise einen etwa dreieckförmigen Querschnitt.

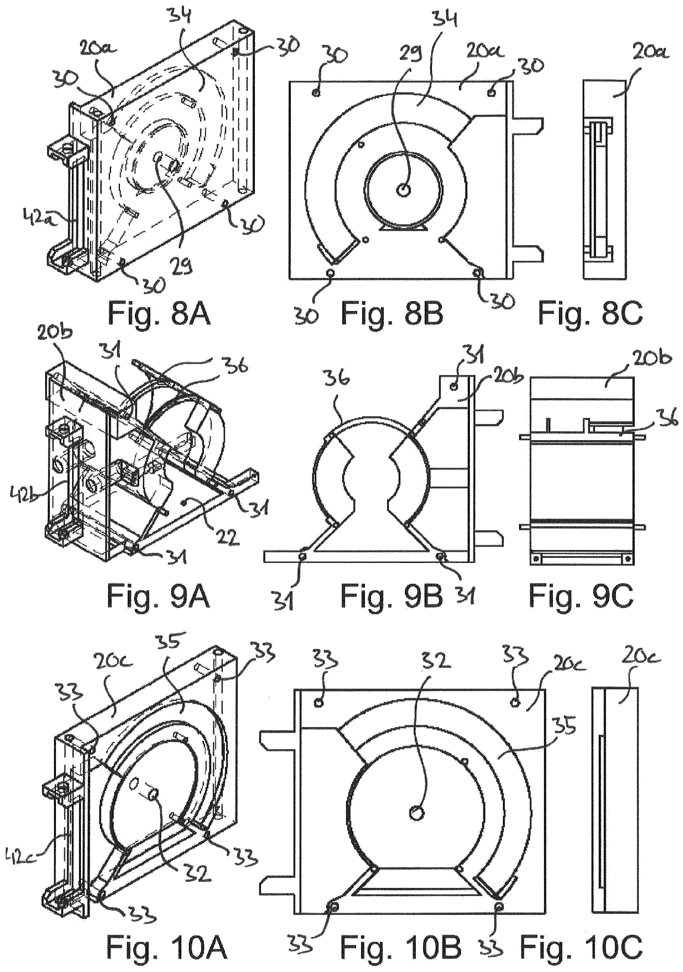

Wie wiederum am besten aus den Fig. 6 und 7 sowie aus den Detailansichten der Fig. 8 bis 10 und 14 hervorgeht, ist das Dosiergehäuse 20 der Dosiereinheit 5 bei dem gezeigten Ausführungsbeispiel mehrteilig ausgebildet und umfasst mehrere, z.B. mittels Schrauben lösbar aneinander befestigbare Gehäuseteile, nämlich:
- eine erste Stirnwand 20a des Dosiergehäuses 20, welche eine zentrale Bohrung 29 zur Lagerung der die Dosierwalze 23 tragenden Welle (nicht gezeigt) sowie eine Mehrzahl an Befestigungsbohrungen 30 in ihrem Umfangsbereich aufweist, welche zur Aufnahme der Schrauben (ebenfalls nicht gezeigt) dienen (vgl. insbesondere die Fig. 8A bis 8C);
- einen an der ersten Stirnwand 20a lösbar befestigten, mittleren Dosiergehäuseabschnitt 20b, welcher sich im vorliegenden Fall im Wesentlichen L-förmig erstreckt, die Frontwand sowie die untere, mit dem Auslass 22 versehene Wand des Dosiergehäuses 20 bildet und mit den Befestigungsbohrungen 30 der ersten Stirnwand 20a fluchtende Befestigungsbohrungen 31 aufweist (vgl. insbesondere die Fig. 9A bis 9C);
- eine an der der ersten Stirnwand 20a entgegengesetzten Seite des Dosiergehäuseabschnittes 20b lösbar befestigte zweite Stirnwand 20c, welche - insoweit im Wesentlichen entsprechend der ersten Stirnwand 20a - eine zentrale Bohrung 32 zur Lagerung der die Dosierwalze 23 tragenden Welle (nicht gezeigt) sowie eine Mehrzahl an Befestigungsbohrungen 33 in ihrem Umfangsbereich aufweist, welche zur Aufnahme der Schrauben (ebenfalls nicht gezeigt) dienen und mit den Befestigungsbohrungen 30, 31 der ersten Stirnwand 20a bzw. des Dosiergehäuseabschnittes 20b fluchten (vgl. insbesondere die Fig. 10A bis 10C); und
- ein Wandteil 20d, welches die der Frontwand des Dosiergehäuseabschnittes 20b entgegengesetzte Rückwand bildet und welches an seiner oberen Seite gemeinsam mit der oberen Seite der Frontwand des Gehäuseabschnittes 20b sowie den oberen Seiten der beiden Stirnwände 20a, 20c den Einlass 21 des Dosiergehäuses 20 begrenzt (vgl. insbesondere die Fig. 14A bis 14C). Das Wandteil 20d ist, z.B. mittels Schrauben (nicht gezeigt) lösbar an dem Gehäuseabschnitt 20b festgelegt und umfasst an seiner Oberseite z.B. eine schräg nach innen und unten verlaufende Ebene 37, welche den Einlass 21 des Dosiergehäuses 20 begrenzt und deren Kontur an die an deren freies Ende unmittelbar anschließenden Absperrschieber 26, 27, 28 angepasst ist, wobei die Ebene 37 den freien Enden der Absperrteile 26a, 27a, 28a als Anschlag dient, wenn sich die Absperrschieber 26, 27, 28 in ihrer Absperr- bzw. Schließstellung befinden.

Wie bereits erwähnt, sind die Absperrschieber 26, 27, 28 im Innern des Dosiergehäuses 20 gelagert, was bei der vorliegenden Ausführungsform wie folgt geschieht. Der dem - hier als Feindosierradsegment ausgebildeten - Dosierradsegment 23a zugeordnete stirnseitige Absperrschieber 26 ist mittels seines Lagerteils 26b, welches nicht nur einen etwa kreisbogenförmigen Innenumfang, sondern auch einen etwa kreisbogenförmigen Außenumfang besitzt und folglich im Wesentlichen die Form eines Teilkreisrings aufweist, in einer hierzu komplementären Führungsnut 34 (vgl. insbesondere die Fig. 8A und 8B bzw. 11A bis 11C) im Innern der dem Absperrschieber 26 benachbarten Stirnwand 20a des Dosiergehäuses 20 gelagert. Sowohl das Lagerteil 26b des Absperrschiebers 26 als auch die Führungsnut 34 des Stirnwand 20a des Dosiergehäuses 20 erstrecken sich dabei konzentrisch zu der Dosierwalze 23, um den Absperrschieber 26 in Umfangsrichtung der Dosierwalze 23 zwischen seiner Öffnungs- und seiner Absperrstellung verlagern zu können. In weitgehend entsprechender Weise ist der dem - hier als Normaldosierradsegment ausgebildeten - Dosierradsegment 23c zugeordnete stirnseitige Absperrschieber 28 ist mittels seines Lagerteils 28b, welches gleichfalls nicht nur einen etwa kreisbogenförmigen Innenumfang, sondern auch einen etwa kreisbogenförmigen Außenumfang besitzt und folglich im Wesentlichen die Form eines Teilkreisrings aufweist, in einer hierzu komplementären Führungsnut 35 (vgl. insbesondere die Fig. 10A und 10B bzw. 13A bis 13C) im Innern der dem Absperrschieber 28 benachbarten Stirnwand 20c des Dosiergehäuses 20 gelagert. Sowohl das Lagerteil 28b des Absperrschiebers 28 als auch die Führungsnut 35 des Stirnwand 20c des Dosiergehäuses 20 erstrecken sich dabei gleichfalls konzentrisch zu der Dosierwalze 23, um den Absperrschieber 28 in Umfangsrichtung der Dosierwalze 23 zwischen seiner Öffnungs- und seiner Absperrstellung verlagern zu können.

Der zwischen den Absperrschiebern 26, 28 angeordnete Absperrschieber 27, welcher dem - hier gleichfalls als Normaldosierradsegment ausgebildeten - mittleren Dosierradsegment 23b zugeordnet ist, ist ebenfalls im Innern des Dosiergehäuses 20 gelagert, nämlich an einer Führung 36 des Dosiergehäuseabschnittes 20b, welche eine zu dem im Wesentlichen kreisbogenförmigen Innenumfang des Absperrschiebers 27 komplementäre Führungsfläche aufweist. Im vorliegenden Fall umfasst die Führungsfläche der Führung 36 zwei parallele, sich entlang eines Kreisbogens erstreckende Schienenelemente, deren Abstand der axialen Breite des mittleren Dosierradsegmentes 23b der Dosierwalze entspricht. Im montierten Zustand befinden sich die beiden Schienenelemente der Führung 36 unmittelbar radial außenseitig der das mittlere Dosierradsegment 23b der Dosierwalze 23 axial begrenzenden ringförmigen Wandungen 24 (vgl. auch die Fig. 15A und 15B) und fluchten mit diesen, um den Absperrschieber 27 zu führen, aber gleichwohl den gesamten Querschnitt des Dosiervolumens des Dosierradsegmentes 23b der Dosierwalze freizulassen. Darüber hinaus kann der dem mittleren Dosierradsegment 23b der Dosierwalze 23 zugeordnete Absperrschieber 27 an einem in Axialrichtung benachbarten Absperrschieber - hier: dem Absperrschieber 28 - gelagert sein, was im vorliegenden Fall durch zueinander komplementäre Führungsflächen 38, 39 einerseits des Absperrschiebers 27, andererseits des diesem benachbarten Absperrschiebers 28 an deren einander zugewandten Seiten geschieht. Die Führungsflächen 38 bzw. 39 sind am besten in den Fig. 12C bzw. Fig. 13C erkennbar und bilden beispielsweise im Wesentlichen je ein zueinander komplementäres Stufenprofil.

Während die Absperrschieber 26, 27, 28 grundsätzlich auch unabhängig voneinander manuell betätigbar sein können, wie beispielsweise mittels einer Handhabe, welche das Dosiergehäuse durchgreift (nicht zeichnerisch wiedergegeben), sind die Absperrschieber 26, 27, 28 beim vorliegenden Ausführungsbeispiel unabhängig voneinander in fernbedienbarer Weise motorisch betätigt, wie beispielsweise mittels ebenfalls zeichnerisch nicht dargestellter Antriebsmotoren, **z.B.** in Form von Elektromotoren, welche bei der vorliegenden Ausführungsform außerhalb des Dosiergehäuses 20 der Dosiereinheit 5 angeordnet sind, aber auch in deren Innern untergebracht sein können (nicht gezeigt). Zu diesem Zweck umfasst ein jeweiliger Antrieb eines jeweiligen Absperrschiebers 26, 27, 28 je eine an einer Außenseite des Dosiergehäuses 20 - hier: einerseits an je einer der Stirnwände 20a, 20c des Dosiergehäuses 20, andererseits an dem Dosiergehäuseabschnitt 20b - axialfest, aber drehbar gelagerte Gewindespindel 40a, 40b, 40c (siehe insbesondere die Fig. 2, 4 und 6), welche von je einem (nicht gezeigten) Antriebsmotor in Drehung versetzbar sind. Die Gewindespindeln 40a, 40b, 40c erstrecken sich in geometrischer Hinsicht jeweils als Passante in Bezug auf die Dosierwalze 23 bzw. in Bezug auf den kreisbogenförmigen Verlagerungsweg eines jeweiligen Absperrschiebers 26, 27, 28. Entlang einer jeden Gewindespindel 40a, 40b, 40c ist je eine hiermit im Eingriff stehende Spindelmutter 41a, 41b, 41c geführt, welche mit einem jeweiligen Absperrschieber 26, 27, 28 in Verbindung steht, um den Absperrschieber 26, 27, 28 durch Rotieren der Gewindespindel 40a, 40b, 40c und der dadurch bewirkten Verlagerung einer jeweiligen Spindelmutter 41a, 41b, 41c in Axialrichtung einer jeweiligen Gewindespindel 40a, 40b, 40c zu betätigen. Um eine jeweilige Spindelmutter 41a, 41b, 41c mit einem jeweiligen Absperrschieber 26, 27, 28 zwecks dessen Betätigung zu verbinden, erstreckt sich parallel zu einer jeweiligen Gewindespindel 40a, 40b, 40c in dem Dosiergehäuse 20 je ein Langloch 42a, 42b, 42c. Jedes Langloch 42a, 42b, 42c ist von einer jeweiligen Spindelmutter 41a, 41b, 41c durchgriffen, wobei die Spindelmutter 41a, 41b, 41c an ihrem in ein jeweiliges Langloch 42a, 42b, 42c eingreifenden Abschnitt mit einem sich etwa in Radialrichtung einer jeweiligen Gewindespindel 40a, 40b, 40c erstreckenden Schlitz 43a, 43b, 43c (vgl. die Fig. 5) versehen ist, in welchem ein jeweiliger Absperrschieber 26, 27, 28 an die Spindelmutter 41a, 41b, 41c angelenkt ist, wie beispielsweise mittels eines eine jeweilige Bohrung 26c, 27c, 28c eines jeweiligen Absperrschiebers 26, 27, 28 durchgreifenden Stiftes (nicht gezeigt), welcher in dem Schlitz 43a, 43b, 43c einer jeweiligen Spindelmutter 41a, 41b, 41c in Erstreckungsrichtung dieses Schlitzes 43a, 43b, 43c verschiebbar ist. Auf diese Weise lassen sich die Abstandsveränderungen infolge der translatorischen Verlagerung der Spindelmutter 41a, 41b, 41c entlang der Gewindespindel 40a, 40b, 40c gegenüber der rotatorischen Verlagerung des Absperrschiebers 26, 27, 28 in Umfangsrichtung der Dosierwalze 23 kompensieren.

## Patentansprüche

1. Dosiereinheit (5) für pulver- und/oder partikelförmiges Verteilgut, insbesondere Saatgut und/oder Dünger, mit einer Dosierwalze (23) mit wenigstens zwei Dosierradsegmenten (23a, 23b, 23c), welche in einem Dosiergehäuse (20) mit einem Einlass (21) und einem Auslass (22) gelagert ist, wobei einem jeweiligen Dosierradsegment (23a, 23b, 23c) ein unabhängig voneinander betätigbarer Absperrschieber (26, 27, 28) zugeordnet ist, um ein oder mehrere Dosierradsegment(e) (23a, 23b, 23c) bedarfsweise außer Betrieb zu setzen, wobei die Absperrschieber (26, 27, 28) im Innern des Dosiergehäuses (20) gelagert sind und eine in Axialrichtung geneigte Absperrfläche aufweisen, wobei die Absperrschieber (26, 27, 28) einen im Wesentlichen kreisbogenförmigen Innenumfang aufweisen und in Umfangsrichtung eines jeweiligen Dosierradsegmentes (23a, 23b, 23c) der Dosierwalze (23) zwischen einer Absperrstellung, in welcher sie zwischen dem Einlass (21) und/oder dem Auslass (22) und dem jeweiligen Dosierradsegment (23a, 23b, 23c) angeordnet sind und das jeweilige Dosierradsegment (23a, 23b, 23c) außer Betrieb setzen, und wenigstens einer Öffnungsstellung, in welcher der Einlass (21) und der Auslass (22) mit dem jeweiligen Dosierradsegment (23a, 23b, 23c) in Verbindung stehen, betätigbar sind.

2. Dosiereinheit nach Anspruch 1, **dadurch gekennzeichnet, dass** der Außenumfang der Absperrfläche eines jeweiligen Absperrschiebers (26, 27, 28) von einer jeweiligen Außenseite des Dosiergehäuses (20) nach innen abnimmt.

3. Dosiereinheit nach Anspruch 1 oder 2, **dadurch gekennzeichnet, dass** die Absperrschieber (26, 27, 27) zwischen der Absperrstellung, in welcher sie zwischen dem Einlass (21) und dem jeweiligen Dosierradsegment (23a, 23b, 23c) angeordnet sind und das jeweilige Dosierradsegment (23a, 23b, 23c) außer Betrieb setzen, und der wenigstens einen Öffnungsstellung, in welcher der Einlass (21) mit dem jeweiligen Dosierradsegment (23a, 23b, 23c) in Verbindung steht, betätigbar sind.

4. Dosiereinheit nach einem der Ansprüche 1 bis 3, **dadurch gekennzeichnet, dass** ein jeweiligen Absperrschieber (26, 27, 28) mittels je einer Handhabe unabhängig voneinander betätigbar ist, wobei die Handhabe das Dosiergehäuse (20) insbesondere durchsetzt.

5. Dosiereinheit nach einem der Ansprüche 1 bis 4, **dadurch gekennzeichnet, dass** einem jeweiligen Absperrschieber (26, 27, 28) ein unabhängig voneinander steuer- und/oder regelbarer, insbesondere elektromotorischer oder aktuatorischer, Antrieb zugeordnet ist.

6. Dosiereinheit nach Anspruch 5, **dadurch gekennzeichnet, dass** der Antrieb eines jeweiligen Absperrschiebers (26, 27, 28) je eine Gewindespindel (40a, 40b, 40c) aufweist, welche von einem Antriebsmotor in Drehung versetzbar und entlang welcher eine mit der Gewindespindel (40a, 40b, 40c) im Eingriff stehende Spindelmutter (41a, 41b, 41c) geführt ist, welche mit einem jeweiligen Absperrschieber (26, 27, 28) in Verbindung steht, um den Absperrschieber (26, 27, 28) durch Rotieren der Gewindespindel (40a, 40b, 40c) zu betätigen.

7. Dosiereinheit nach Anspruch 6, **dadurch gekennzeichnet, dass** die Spindelmutter (41a, 41b, 41c) einen sich im Wesentlichen in Radialrichtung der Gewindespindel (40a, 40b, 40c) erstreckenden Schlitz (43a, 43b, 43c) aufweist, in welchem der Absperrschieber (26, 27, 28) an die Spindelmutter (41a, 41b, 41c) angelenkt ist, um Abstandsveränderungen infolge der translatorischen Verlagerung der Spindelmutter (41a, 41b, 41c) entlang der Gewindespindel (40a, 40b, 40c) gegenüber der Verlagerung des Absperrschiebers (26, 27, 28) in Umfangsrichtung der Dosierwalze (23) zu kompensieren.

8. Dosiereinheit nach einem der Ansprüche 5 bis 7, **dadurch gekennzeichnet, dass** der Antrieb eines jeweiligen Absperrschiebers (26, 27, 28)
- außerhalb des Dosiergehäuses angeordnet ist, wobei die Gewindespindeln (40a, 40b, 40c) insbesondere an einer Außenseite des Dosiergehäuses (20) gelagert sind; oder
- innerhalb des Dosiergehäuses angeordnet ist, wobei die Gewindespindeln (40a, 40b, 40c) insbesondere innenseitig des Dosiergehäuses (20) gelagert sind.

9. Dosiereinheit nach einem der Ansprüche 1 bis 8, **dadurch gekennzeichnet, dass** wenigstens ein stirnseitiger Absperrschieber (26, 28), insbesondere beide stirnseitigen Absperrschieber (26, 28), in einer Führungsnut (34, 35) im Innern einer Stirnwand (20a, 20c) des Dosiergehäuses (20) gelagert ist bzw. sind.

10. Dosiereinheit nach einem der Ansprüche 1 bis 9, **dadurch gekennzeichnet, dass** die Dosierwalze (23) wenigstens drei Dosierradsegmente (23a, 23b, 23c) aufweist, wobei einem jeweiligen Dosierradsegment (23a, 23b, 23c) je ein Absperrschieber (26, 27, 28) zugeordnet ist.

11. Dosiereinheit nach Anspruch 10, **dadurch gekennzeichnet, dass** wenigstens ein, wenigstens einem mittleren Dosierradsegment (23b) zugeordneter Absperrschieber (27) an einer im Innern des Dosiergehäuses (20) angeordneten Führung (36) gelagert ist, welche eine zu dem im Wesentlichen kreisbogenförmigen Innenumfang des Absperrschiebers (27) komplementäre Führungsfläche aufweist.

12. Dosiereinheit nach Anspruch 11, dass die im Innern des Dosiergehäuses (20) angeordnete Führung (36) des dem wenigstens einen mittleren Dosierradsegment (23b) zugeordneten Absperrschiebers (27) an einem Dosiergehäuseabschnitt (20b) angeordnet ist, welcher mit wenigstens einer Stirnwand (20a, 20c), insbesondere mit beiden Stirnwänden (20a, 20c), des Dosiergehäuses (20) lösbar verbunden ist.

13. Dosiereinheit nach einem der Ansprüche 10 bis 12, **dadurch gekennzeichnet, dass** wenigstens ein, wenigstens einem mittleren Dosierradsegment (23b) zugeordneter Absperrschieber (27) an einem in Axialrichtung benachbarten Absperrschieber (28) gelagert ist, wobei die in Axialrichtung benachbarten Absperrschieber (27, 28) insbesondere zueinander komplementärer Führungsflächen (38, 39) aufweisen.

14. Dosiereinheit nach einem der Ansprüche 1 bis 13, **dadurch gekennzeichnet, dass** die Dosierradsegmente (23a, 23b, 23c) der Dosierwalze (23)
- an ihren einander zugewandten axialen Enden mittels einer ringförmigen Wandung (24) voneinander getrennt sind; und/oder
- von Nocken- und/oder Zellenrädern gebildet sind, welche insbesondere ein unterschiedliches Dosiervolumen aufweisen.

15. Verteilmaschine, insbesondere Sämaschine oder Düngerstreuer, **gekennzeichnet durch** wenigstens eine Dosiereinheit (5) nach einem der Ansprüche 1 bis 14.

## Claims

1. Metering unit (5) for powdered and/or particulate distribution material, in particular seed and/or fertilizer, the metering unit comprising a metering roller (23) having at least two metering wheel segments (23a, 23b, 23c), which roller is mounted in a metering housing (20) having an inlet (21) and an outlet (22), wherein an independently actuatable shut-off valve (26, 27, 28) is assigned to a relevant metering wheel segment (23a, 23b, 23c) in order to put one or more metering wheel segment(s) (23a, 23b, 23c) out of operation as required, wherein the shut-off valves (26, 27, 28) are mounted in the interior of the metering housing (20) and have a shut-off surface inclined in the axial direction, wherein the shut-off valves (26, 27, 28) have a substantially circular-arc-shaped inner circumference and can be actuated, in the circumferential direction of a relevant metering wheel segment (23a, 23b, 23c) of the metering roller (23), between a shut-off position, in which they are arranged between the inlet (21) and/or the outlet (22) and the relevant metering wheel segment (23a, 23b, 23c) and put the relevant metering wheel segment (23a, 23b, 23c) out of operation, and at least one open position, in which the inlet (21) and the outlet (22) are connected to the relevant metering wheel segment (23a, 23b, 23c).

2. Metering unit according to claim 1, **characterized in that** the outer circumference of the shut-off surface of a relevant shut-off valve (26, 27, 28) decreases inward from a relevant outer side of the metering housing (20).

3. Metering unit according to either claim 1 or claim 2, **characterized in that** the shut-off valves (26, 27, 27) can be actuated between the shut-off position, in which they are arranged between the inlet (21) and the relevant metering wheel segment (23a, 23b, 23c) and put the relevant metering wheel segment (23a, 23b, 23c) out of operation, and the at least one open position, in which the inlet (21) is connected to the relevant metering wheel segment (23a, 23b, 23c).

4. Metering unit according to any of claims 1 to 3, **characterized in that** a relevant shut-off valve (26, 27, 28) can be independently actuated by means of a corresponding handle, the handle in particular passing through the metering housing (20).

5. Metering unit according to any of claims 1 to 4, **characterized in that** an independently controllable and/or adjustable, in particular electromotive or actuating, drive is assigned to a relevant shut-off valve (26, 27, 28).

6. Metering unit according to claim 5, **characterized in that** the drive of a relevant shut-off valve (26, 27, 28) has a corresponding threaded spindle (40a, 40b, 40c) which can be rotated by a drive motor and along which a spindle nut (41a, 41b, 41c) which is in engagement with the threaded spindle (40a, 40b, 40c) is guided, which spindle nut is connected to a relevant shut-off valve (26, 27, 28) in order to actuate the shut-off valve (26, 27, 28) by rotating the threaded spindle (40a, 40b, 40c).

7. Metering unit according to claim 6, **characterized in that** the spindle nut (41a, 41b, 41c) has a slot (43a, 43b, 43c) extending substantially in the radial direction of the threaded spindle (40a, 40b, 40c), in which slot the shut-off valve (26, 27, 28) is articulated to the spindle nut (41a, 41b, 41c) in order to compensate for changes in distance caused by the translational movement of the spindle nut (41a, 41b, 41c) along the threaded spindle (40a, 40b, 40c) with respect to the movement of the shut-off valve (26, 27, 28) in the circumferential direction of the metering roller (23).

8. Metering unit according to any of claims 5 to 7, **characterized in that** the drive of a relevant shut-off valve (26, 27, 28)
- is arranged outside the metering housing, the threaded spindles (40a, 40b, 40c) being mounted in particular on an outer side of the metering housing (20); or
- is arranged within the metering housing, the threaded spindles (40a, 40b, 40c) being mounted in particular on the inside of the metering housing (20).

9. Metering unit according to any of claims 1 to 8, **characterized in that** at least one end-face shut-off valve (26, 28), in particular both end-face shut-off valves (26, 28), is or are mounted in a guide groove (34, 35) in the interior of an end wall (20a, 20c) of the metering housing (20).

10. Metering unit according to any of claims 1 to 9, **characterized in that** the metering roller (23) has at least three metering wheel segments (23a, 23b, 23c), a corresponding shut-off valve (26, 27, 28) being assigned to a relevant metering wheel segment (23a, 23b, 23c).

11. Metering unit according to claim 10, **characterized in that** at least one shut-off valve (27) assigned to at least one central metering wheel segment (23b) is mounted on a guide (36) arranged in the interior of the metering housing (20), which guide has a guide surface complementary to the substantially circular-arc-shaped inner circumference of the shut-off valve (27).

12. Metering unit according to claim 11, **characterized in that** the guide (36), which is arranged in the interior of the metering housing (20), of the shut-off slide valve (27) assigned to the at least one central metering wheel segment (23b) is arranged on a metering housing portion (20b) which is detachably connected to at least one end wall (20a, 20c), in particular to both end walls (20a, 20c), of the metering housing (20).

13. Metering unit according to any of claims 10 to 12, **characterized in that** at least one shut-off valve (27) assigned to at least one central metering wheel segment (23b) is mounted on an axially adjacent shut-off valve (28), the axially adjacent shut-off valves (27, 28) in particular having mutually complementary guide surfaces (38, 39).

14. Metering unit according to any of claims 1 to 13, **characterized in that** the metering wheel segments (23a, 23b, 23c) of the metering roller (23)
- are separated from one another at the mutually facing axial ends thereof by means of an annular wall (24); and/or
- are formed by cam and/or cell wheels, which in particular have a different metering volume.

15. Distribution machine, in particular seed spreader or fertilizer spreader, **characterized by** at least one metering unit (5) according to any of claims 1 to 14.

## Revendications

1. Unité de dosage (5) pour produit à épandre sous forme de poudre ou de particules, notamment de semences et/ou d'engrais, avec un rouleau de dosage (23) équipé d'au moins deux segments de roue de dosage (23a, 23b, 23c), ladite unité étant disposée dans un carter de dosage (20) doté d'une admission (21) et d'une sortie (22), dans laquelle une vanne à tiroir (26, 27, 28) pouvant être actionnée de façon indépendante est associée à un segment de roue de dosage (23a, 23b, 23c) respectif, pour pouvoir désactiver un ou plusieurs segments de roue de dosage (23a, 23b, 23c) en cas de besoin, les vannes à tiroir (26, 27, 28) étants disposées à l'intérieur du carter de dosage (20) et comportent une surface de déverrouillage inclinée dans la direction axiale, dans laquelle les vannes à tiroir (26, 27, 28) présentent une circonférence intérieure pour l'essentiel en forme d'arc de cercle et peuvent être actionnées dans la direction circonférentielle d'un segment de roue de dosage (23a, 23b, 23c) respectif du rouleau de dosage (23) entre une position de déverrouillage dans laquelle elles sont disposées entre l'admission (21) et/ou la sortie (22) et le segment de roue de dosage (23a, 23b, 23c) respectif et désactivent le segment de roue de dosage (23a, 23b, 23c) respectif et au moins une position d'ouverture dans laquelle l'admission (21) et la sortie (22) sont reliées au segment de roue de dosage (23a, 23b, 23c) respectif.

2. Unité de dosage selon la revendication **1, caractérisée en ce que** la circonférence extérieure de la surface de déverrouillage d'une vanne à tiroir (26, 27, 28) respective décroît vers l'intérieur depuis un côté extérieur respectif du carter de dosage (20).

3. Unité de dosage selon la revendication 1 ou 2, **caractérisée en ce que** les vannes à tiroir (26, 27, 27) peuvent être actionnées entre la position de déverrouillage dans laquelle elles sont disposées entre l'admission (21) et le segment de roue de dosage (23a, 23b, 23c) respectif et désactivent le segment de roue de dosage (23a, 23b, 23c) respectif et l'au moins une position d'ouverture dans laquelle l'admission (21) est reliée au segment de roue de dosage (23a, 23b, 23c) respectif.

4. Unité de dosage selon l'une quelconque des revendications 1 à 3, **caractérisée en ce qu'**une vanne à tiroir (26, 27, 28) respective peut être actionnée de façon indépendante à l'aide d'une manette respective, dans laquelle la manette passe notamment dans le carter de dosage (20).

5. Unité de dosage selon l'une quelconque des revendications 1 à 4, **caractérisée en ce qu'**un entraînement à commande et/ou réglage indépendants, notamment sous la forme d'un moteur électrique ou d'un actionneur, est associé à une vanne à tiroir (26, 27, 28) respective.

6. Unité de dosage selon la revendication 5, **caractérisée en ce que** l'entraînement d'une vanne à tiroir (26, 27, 28) respective comporte respectivement une broche filetée (40a, 40b, 40c) pouvant être mise en rotation par un moteur d'entraînement et le long de laquelle est guidé un écrou de broche (41a, 41b, 41c) en prise avec la broche filetée (40a, 40b, 40c), ledit écrou étant relié à une vanne à tiroir (26, 27, 28) respective pour actionner la vanne à tiroir (26, 27, 28) par rotation de la broche filetée (40a, 40b, 40c).

7. Unité de dosage selon la revendication 6, **caractérisée en ce que** l'écrou de broche (41a, 41b, 41c) comporte une fente (43a, 43b, 43c) s'étendant pour l'essentiel dans la direction radiale de la broche filetée (40a, 40b, 40c), dans laquelle est articulée la vanne à tiroir (26, 27, 28) au niveau de l'écrou de broche (41a, 41b, 41c), pour compenser les variations de distance dues au déplacement translationnel de l'écrou de broche (41a, 41b, 41c) le long de la broche filetée (40a, 40b, 40c) par rapport au déplacement de la vanne à tiroir (26, 27, 28) dans la direction circonférentielle du rouleau de dosage (23).

8. Unité de dosage selon l'une quelconque des revendications 5 à 7, **caractérisée en ce que** l'entraînement d'une vanne à tiroir (26, 27, 28) respective :
- est disposé à l'extérieur du carter de dosage, les broches filetées (40a, 40b, 40c) étant notamment disposées au niveau d'un côté extérieur du carter de dosage (20) ; ou
- est disposé à l'intérieur du carter de dosage, les broches filetées (40a, 40b, 40c) étant notamment disposées au niveau du côté intérieur du carter de dosage (20).

9. Unité de dosage selon l'une quelconque des revendications 1 à 8, **caractérisée en ce qu'**au moins une vanne à tiroir (26, 28) située au niveau du côté avant, notamment deux vannes à tiroir (26, 28) situées au niveau du côté avant, est et/ou sont disposées dans une rainure de guidage (34, 35) à l'intérieur d'une paroi avant (20a, 20c) du carter de dosage (20).

10. Unité de dosage selon l'une quelconque des revendications 1 à 9, **caractérisée en ce que** le rouleau de dosage (23) comporte au moins trois segments de roue de dosage (23a, 23b, 23c), dans laquelle respectivement une vanne à tiroir (26, 27, 28) est associée à un segment de roue de dosage (23a, 23b, 23c) respectif.

11. Unité de dosage selon la revendication 10, **caractérisée en ce qu'**au moins une vanne à tiroir (27) associée à au moins un segment de roue de dosage (23b) central est disposée au niveau d'un guide (36) disposé à l'intérieur du carter de dosage (20), lequel comporte une surface de guidage complémentaire à la circonférence intérieure pour l'essentiel en forme d'arc de cercle de la vanne à tiroir (27).

12. Unité de dosage selon la revendication 11, **caractérisée en ce que** le guide (36) disposé à l'intérieur du carter de dosage (20) de la vanne à tiroir (27) associée à l'au moins un segment de roue de dosage (23b) central est disposée au niveau d'une section de carter de dosage (20b) qui est reliée de façon amovible à au moins une paroi avant (20a, 20c), notamment aux deux parois avant (20a, 20c), du carter de dosage (20).

13. Unité de dosage selon l'une quelconque des revendications 10 à 12, **caractérisée en ce qu'**au moins une vanne à tiroir (27) associée à au moins un segment de roue de dosage (23b) central est disposée au niveau d'une vanne à tiroir (28) connexe dans la direction axiale, les vannes à tiroir (27, 28) connexes dans la direction axiale comportant notamment des surfaces de guidage (38, 39) complémentaires les unes par rapport aux autres.

14. Unité de dosage selon l'une quelconque des revendications 1 à 13, **caractérisée en ce que** les segments de roue de dosage (23a, 23b, 23c) du rouleau de dosage (23) :
- sont séparés les uns des autres au niveau de leurs extrémités axiales orientées l'une vers l'autre au moyen d'une paroi (24) de forme annulaire ; et/ou
- sont formés de cames et/ou de roues cellulaires comportant notamment un volume de dosage différent.

15. Machine d'épandage, notamment machine à semer ou épandeur d'engrais, **caractérisée par** la présence d'au moins une unité de dosage (5) selon l'une quelconque des revendications 1 à 14.
